# EUROPÄISCHE PATENTSCHRIFT

(11) **EP 3 050 775 B1**
(45) Veröffentlichungstag und Bekanntmachung des Hinweises auf die Patenterteilung: **23.05.2018**
(21) Anmeldenummer: 15152824.7
(22) Anmeldetag: 28.01.2015
(51) Int. Cl.: B62D 1/06, B62D 1/11

(54) **Lenkrad**
Steering wheel
Volant

(43) Veröffentlichungstag der Anmeldung: 03.08.2016
(73) Patentinhaber: MAGNA STEYR Fahrzeugtechnik AG & Co KG, 8041 Graz (AT)
(72) Erfinder: Geisler, Johannes, 8522 Groß St. Florian (AT)
(74) Vertreter: Zangger, Bernd

(56) Entgegenhaltungen:
- EP-A2- 2 114 750
- DE-A1- 4 239 999
- DE-A1- 10 144 079
- DE-A1- 10 247 370
- DE-A1- 19 737 744
- DE-A1- 19 919 278

## Beschreibung

### Gebiet der Erfindung

Die vorliegende Erfindung betrifft ein Lenkrad für ein Fahrzeug und ein Fahrzeug umfassend ein solches Lenkrad.

### Stand der Technik

Ein Lenkrad (auch Steuerrad, veraltet Volant) ist ein Bestandteil der Lenkung eines Fahrzeugs, mit dessen Hilfe der Fahrzeuglenker durch Drehbewegung meist die Vorderräder des Fahrzeugs aus der Geradeausstellung in eine Lenkstellung bringen kann. Es dient der Richtungsänderung des Fahrzeugs. Lenkräder ähneln üblicherweise einem Ring, welcher mit Speichen mit dem Mittelteil, dem sogenannten Pralltopf, verbunden ist.

Nach bekanntem Stand der Technik kann man zwei Arten von mit den Händen bedienbaren Lenkradringen unterscheiden:
Erstens ein "Voll-Ring-Lenkrad" bzw. "Vollbedienungslenkrad": Das Lenkrad ist als Vollring oder Kreislenkrad ausgeführt, also nicht unterbrochen. Der Bedienungsring, also die Greiffläche für die Hände, kann als Kreis oder in anderen Formen ausgeführt sein, ist aber geschlossen. Das Lenken erfolgt auch mit Übergreifen der Hände.

Zweitens "Teil-Ring-Lenkrad" bzw. "Teilbedienungslenkrad", bekannt zum Beispiel aus der Formel 1 und von Spielkonsolenlenkrädern: Der Bedienungsring, also die Greiffläche für die Hände, ist kleiner, aktuell in der Formel 1 links und rechts etwas größer als eine Handbreite. Ein kurzer Lenkimpuls reicht um das Auto zu lenken, es wird nicht übergriffen, die Hand bleibt immer an der gleichen Position des Lenkrades.

Aktuell hat man als Lenker eines Fahrzeuges entweder ein Voll-Ring-Lenkrad (meistens bei Serienfahrzeugen) oder ein Teil-Ring-Lenkrad (zum Beispiel in der Formel 1). Dokument DE19919278 A1 zeigt ein Lenkrad für ein Fahrzeug gemäß des Oberbegriffs des Anspruchs 1.

### Zusammenfassung der Erfindung

Es ist eine Aufgabe der Erfindung, ein Lenkrad für ein Fahrzeug anzugeben dass eine gute Sicht auf das Cockpit des Fahrzeuges ermöglicht, dabei aber auch ein bequemes Lenken ermöglicht.

Die Lösung der Aufgabe erfolgt durch ein Lenkrad für ein Fahrzeug, umfassend einen Lenkradring, wobei der Lenkradring dazu vorbereitet ist, dass die Geometrie des Lenkradrings von Vollringlenkrad auf Teilringlenkrad veränderbar, insbesondere umschaltbar, ist.

Erfindungsgemäß können mehrere Lenkradzustände, nämlich Voll-Ring-Lenkrad und ein oder mehrere Teil-Ring-Lenkrad-Zustände, erreicht werden. Das heißt es kann funktional und optisch zwischen den Konfigurationen Teil-Ring-Lenkrad (für zum Beispiel sportliches Fahren in einem S-Modus, autonomes Fahren, usw.) und Voll-Ring-Lenkrad für einen komfortablen bzw. normalen Fahr-Modus gewählt, insbesondere umgeschaltet werden.

So ist eine Umschaltung entsprechend der vom Fahrer individuell und jeweils gewünschten Lenkradgeometrie möglich, insbesondere durch Verschiebung von ineinander verschachtelten Innen- und Außenringen eines Lenkrades. Beispielsweise kann ein oberes und ein unteres Lenkradring-Element eingefahren werden, um ein Lenkrad wie in der Formel 1 üblich zu erhalten oder ein oberes und ein unteres Ring-Element ist jeweils geteilt ausgeführt, oder es ist nur ein oberes Ring-Element vorhanden und verschiebbar. Dadurch hat der Fahrer die individuelle Wahl wie er das Fahrzeug lenken möchte, beispielsweise konventionell oder sportlich bzw. "futuristisch". Die Veränderung der Lenkradgeometrie kann automatisiert, beispielsweise durch einen beliebigen Umschaltimpuls, oder manuell erfolgen.

Dadurch dass die Geometrie des Lenkradringes geändert werden kann, kann die Sicht auf das Cockpit verbessert werden und im Falle eines Unfalles kann ein Kopfaufschlag verhindert werden. Bei Bedarf hat der Fahrer des Fahrzeuges dennoch den Komfort eines vollen Lenkradringes.

Es sei an dieser Stelle erwähnt, dass unter "Ring" nicht nur die Geometrische Form eines Kreises oder Kreissegmentes zu verstehen ist, sondern auch andere Formen möglich sind, beispielsweise ovale, abgeflachte und/oder Ecken aufweisende Formen.

Die Erfindung ist auf verschiedene Arten von Fahrzeugen anwendbar, insbesondere auf Land-, Luft-, und Wasserfahrzeuge, auf Kraftfahrzeuge, auf Automobile und Transportfahrzeuge (Lastkraftwagen), Wasserfahrzeuge (Schiffe, Boote), Luftfahrzeuge (Flugzeuge, Raumschiffe). Weiterbildungen der Erfindung sind in den abhängigen Ansprüchen, der Beschreibung sowie den beigefügten Zeichnungen angegeben. Erfindungsgemäß besteht der Lenkradring aus ineinander verschachtelbaren Elementen, nämlich ineinander verfahrbaren Elementen, nämlich aus äußeren und inneren Elementen, zumindest aus einem äußeren und einem inneren Element.

Die verschiedenen Elemente können unterschiedliche technische Eigenschaften aufweisen wie zum Beispiel unterschiedliche Wärmeleitfähigkeit oder Festigkeit. Insbesondere können innere Elemente andere Eigenschaften aufweisen als äußere Elemente.

Vorzugsweise weisen die ineinander verschachtelbaren Elemente bzw. ineinander verfahrbaren Elemente ein geschlossenes oder ein offenes Profil auf. Insbesondere bilden die Elemente Ringe oder Rohre, bevorzugt mit rundem, ovalem oder eckigem Querschnitt, so dass innere Elemente in äußeren Elementen verschiebbar sind.

Bevorzugt ist zumindest ein äußeres Element als hohles Profil ausgebildet und zumindest ein inneres Element als Vollmaterial, also nicht hohl, ausgebildet. Es können auch sowohl äußere Elemente als auch innere Elemente hohl ausgeführt sein, wodurch eine Gewichtsersparnis erreicht wird. Die inneren Elemente können innerhalb der äußeren Elemente verschiebbar sein.

Vorzugsweise umfasst das Lenkrad einen Mittelteil und zumindest eine Speiche, zur Verbindung des Mittelteils mit dem Lenkradring, wobei die Speiche in ein äußeres Element des Lenkradringes übergeht. Insbesondere kann das Lenkrad links und rechts jeweils zumindest eine Speiche ausbilden. Die Speichen können insbesondere einstückig in äußere Elemente des Lenkradringes übergehen.

Bevorzugt wird mit der Veränderung bzw. Umschaltung der Lenkradgeometrie automatisch die Lenkradübersetzung, also das Verhältnis von Lenkwinkel des Lenkrades zu Lenkwinkel an gelenkten Rädern des Fahrzeuges, mit verändert bzw. umgeschaltet. In einem "Sport Modus" könnte beispielsweise der Lenkimpuls von einer Steuereinheit (bzw. Software) angepasst werden. Die Anpassung kann auch mechanisch, elektrisch, pneumatisch oder hydraulisch erfolgen. Erfindungsgemäß kann bei Betrieb des Fahrzeugs im Falle eines Unfalles des Fahrzeuges, zumindest ein oben angeordnetes Lenkrad-Element automatisch entfernt oder wegbewegt werden - natürlich nur falls ein solches oben angeordnetes Element vor dem Umfall vorhanden war, also wenn das Lenkrad beispielsweise in einem Vollring-Modus betrieben wurde und nicht in einem Teilring-Modus.

Die Veränderung bzw. Umschaltung der Geometrie des Lenkradringes erfolgt bevorzugt mittels eines im Lenkrad zentrisch angeordneten Motors oder mittels mindestens eines außerhalb des Lenkradzentrums angeordneten, insbesondere im Bereich der verfahrbaren Elemente angeordneten Motors.

Die Veränderung bzw. Umschaltung der Geometrie des Lenkradringes kann elektrisch aber auch hydraulisch und/oder pneumatisch erfolgen.

### Kurzbeschreibung der Zeichnungen

Die Erfindung wird im Folgenden beispielhaft unter Bezugnahme auf die Zeichnungen beschrieben.
- Fig. 1: zeigt schematisch ein aus dem Stand der Technik bekanntes Lenkrad.
- Fig. 2 a, b, c: zeigen schematisch ein erfindungsgemäßes Lenkrad in verschiedenen Zuständen.
- Fig. 3: zeigt einen Ausschnitt eines aus dem Stand der Technik bekannten, unveränderlichen Lenkrads.
- Fig. 4a und 4b: zeigen schematisch Ausschnitte von erfindungsgemäßen Lenkrädern.
- Fig. 5a, b, c, d: zeigen vier verschiedene Varianten von erfindungsgemäßen Lenkrädern (Zeilen) in jeweils drei verschiedenen Zuständen (Spalten).
- Fig. 6: zeigt ein weiteres erfindungsgemäßes Lenkrad in drei verschiedenen Zuständen (Spalten).
- Fig. 7a-d: zeigen ein unveränderliches Lenkrad gemäß Stand der Technik.
- Fig. 8: zeigt drei Varianten erfindungsgemäßer Lenkradringe in Teildarstellungen und mit deren Querschnitten.
- Fig. 9: zeigt ein Lenkrad dessen Lenkradringenden in Fig. 8 näher dargestellt sind.
- Fig. 10: zeigt unterschiedliche Profile für ineinander verschiebbare Elemente eines Lenkradringes.
- Fig. 11: zeigt einen Schnitt durch ein erfindungsgemäßes Lenkrad.
- Fig. 12-15: zeigen schematisch eine erfindungsgemäße im Mittelteil des Lenkrads angeordnete pneumatische Steuerung der Elemente des Lenkradringes.
- Fig. 16: zeigt schematisch eine erfindungsgemäße außen angeordnete pneumatische Steuerung der Elemente des Lenkradringes.
- Fig. 17: zeigt schematisch eine erfindungsgemäße hydraulische Steuerung der Elemente des Lenkradringes.
- Fig. 18 - 21: zeigen verschiedene Lösungen zur motorischen Rotation der Elemente des Lenkradringes durch einen zentralen Motor.
- Fig. 22: zeigt eine Lösung zur motorischen Rotation der Elemente des Lenkradringes durch nicht-zentrale Motoren.

### Detaillierte Beschreibung der Erfindung

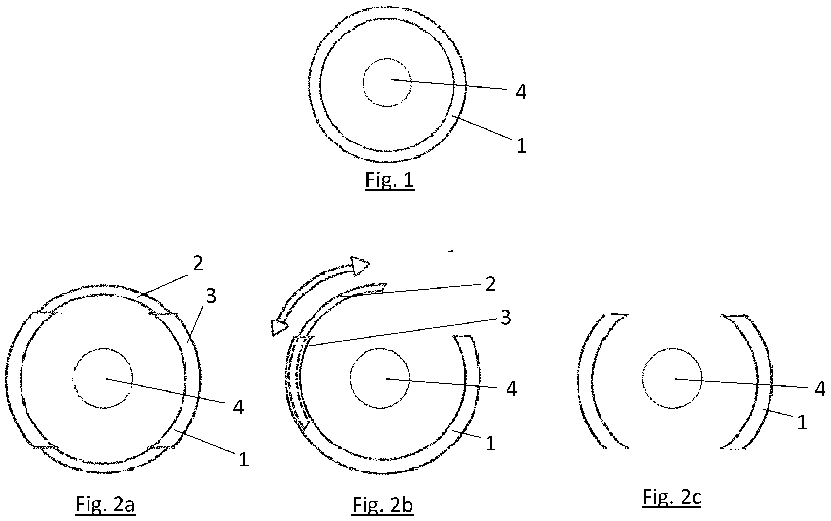

Fig. 1 zeigt schematisch ein aus dem Stand der Technik bekanntes Lenkrad mit einem Lenkradring 1, der einen Vollring bildet. Der Lenkradring 1 ist über hier nicht dargestellte Speichen mit einem Mittelteil 4 des Lenkrades verbunden.

Fig. 2a, b, c zeigt ein erfindungsgemäßes Lenkrad mit einem Lenkradring 1, der aus ineinander verschiebbaren Elementen 2, 3 aufgebaut ist, die um einen Mitteilteil 4 angeordnet sind. Das Lenkrad weist zwei seitlich angeordnete, feststehende äußere Elemente 3 auf, sowie oben und unten am Lenkrad angeordnete innere Elemente 2, die - wie die Fig. 2b und 2c zeigen, in die äußeren Elemente 3 durch eine Drehung um den Mitteilteil 4 verschoben werden können.

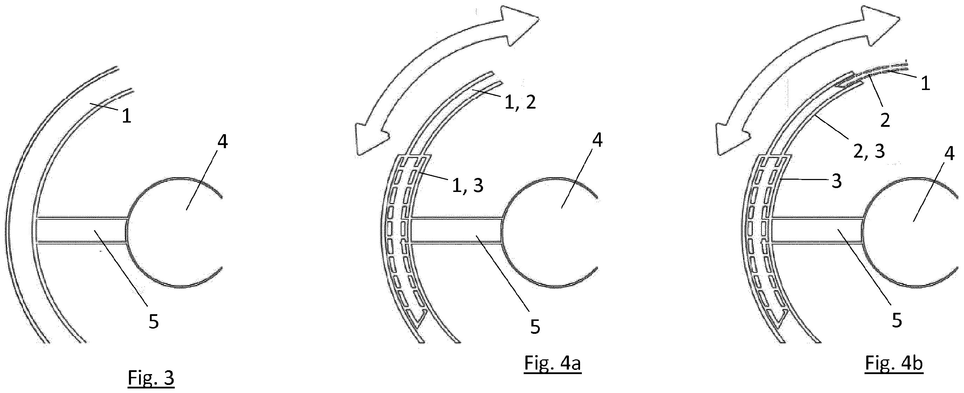

Dieselbe Idee ist genauer ist in den Fig. 3, 4a und 4b dargestellt. Fig. 3 zeigt ein aus dem Stand der Technik bekanntes, unveränderliches Lenkrad, mit Mitteilteil 4 - auch Pralltopf oder Lenkradtopf genannt -, und damit über Speichen 5 verbundenem Lenkradring 1.

In einem in den Fig. 4a und 4b dargestelltem erfindungsgemäßen Lenkrad sind innere Elemente 2 in seitliche äußere Elemente 3 verschiebbar, insbesondere rotierbar, wobei der Mittelpunkt des Lenkrades den Mittelpunkt der Rotation darstellt.

Wie in Fig. 4b erkennbar, können Elemente 2, 3 auch mehrfach geschachtelt sein, sodass ein Element 2 in ein anderes Element 2, 3 verschoben werden kann, dass seinerseits selbst in ein weiteres Element 3 des Lenkradringes verschoben werden kann. Ein Element 2, 3 des Lenkradringes kann daher auch gleichzeitig ein inneres Element 2 und ein äußeres Element 3 darstellen.

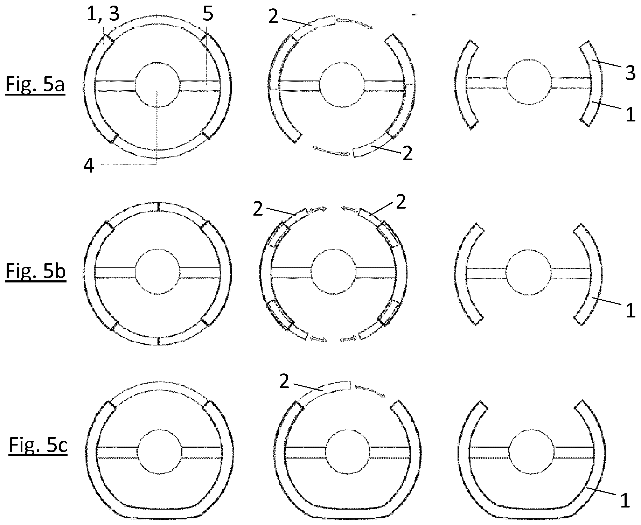

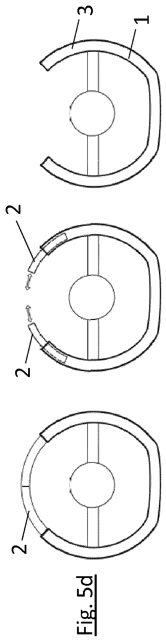

Die Fig. 5a bis 5d zeigen vier verschiedene Varianten von erfindungsgemäßen Lenkrädern, wobei jeweils links der Zustand Vollringlenkrad dargestellt ist, in der Mitte der jeweiligen Zeile die Transformation also ein Zwischenschritt der Veränderung des Lenkrades und jeweils rechts das Lenkrad als Teilringlenkrad dargestellt ist. Es kann beispielsweise ein oberes und ein unteres Element 2 einseitig verschiebbar sein (Fig. 5a) oder nur ein oberes Element 2 (Fig. 5c). Obere und/oder untere Elemente 2 können auch beiderseits in seitliche Elemente 2 verschoben werden (Fig. 5b). Beispielsweis können auch nur oben angeordnete Elemente 2 vorhanden sein, die beidseits in seitliche Elemente verschoben werden (Fig. 5d). Statt der Verwendung von inneren Elementen 2 ist auch jeweils die Verwendung von äußeren Elementen 3 als verschiebliche Elemente möglich.

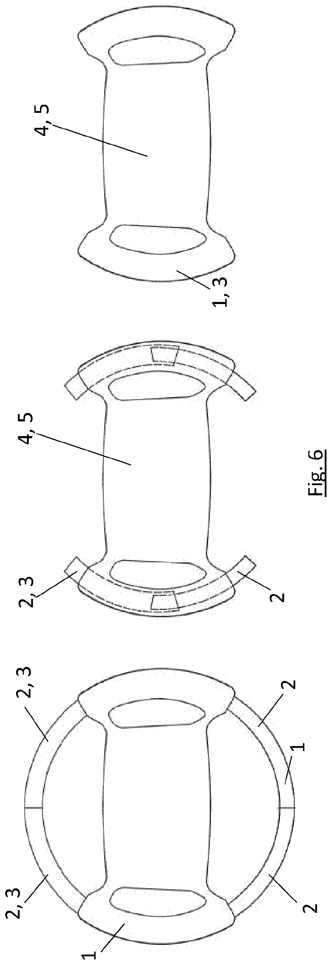

In der in Fig. 6 dargestellten Variante eines erfindungsgemäßen Lenkrades (links Vollring-Zustand, mitte Transformation, rechts Teilring-Zustand) können oben angeordnete Elemente 2, 3 links und rechts in einen seitlichen Teil des Lenkrades verschoben werden, und unten angeordnete Elemente 2 wiederum links und rechts in das Innere der genannten verschobenen Elemente 2, 3 verschoben werden, so dass ein doppeltes Ineinanderschichten von Elementen 2, 3 des Lenkringes stattfindet.

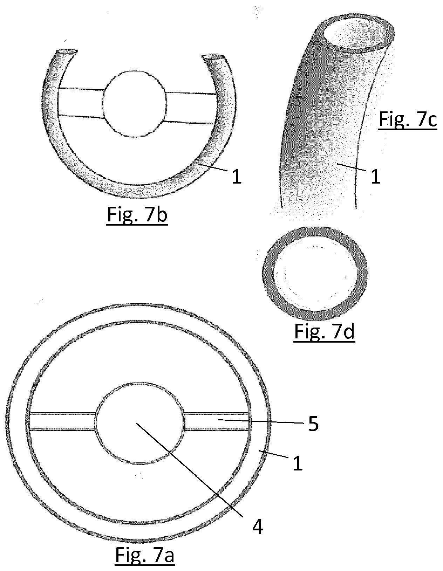

Die Fig. 7a bis 7d zeigen ein unveränderliches Lenkrad gemäß Stand der Technik in einem Schnitt von vorne (Fig. 7a) und dreidimensional jedoch oben aufgeschnitten (Fig. 7b), sowie das entsprechende Profil des Lenkradringes 1 dreidimensional (Fig. 7c) und in seinem Querschnitt (Fig. 7d).

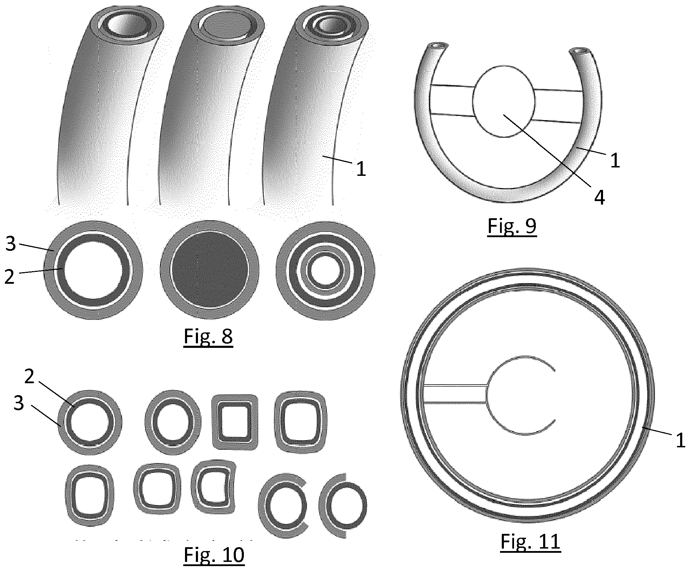

Ähnlich zeigen die Fig. 8 bis Fig. 11 erfindungsgemäße veränderbare Lenkräder, wobei in Fig. 8 links ein innerer Lenkradring 1 dargestellt ist (oben dreidimensional, unten der Querschnitt) der offen - also hohl- ausgeführt ist, in der mitte ein innerer Lenkradring 1 der voll ausgeführt ist und rechts mehrere ineinander verschachtelte hohle Lenkradringe 1 dargestellt sind.

Fig. 10 zeigt unterschiedliche Profile die für ineinander verschiebbare Elemente 2, 3 eines Lenkradringes 1 verwendet werden können, insbesondere runde, ovale und eckige Querschnitte.

Die Verschiebung von mehreren Außen- und Innenringen, also äußeren und inneren Elementen 2, 3 des Lenkrades kann grundsätzlich durch verschiedene Systeme, wie pneumatische Systeme, hydraulische Systeme, elektrische Systeme, teleskopische Systeme (zum Beispiel mit Elektromotoren, Ultraschallmotoren wie zum Beispiel in Objektiven, Linearmotoren, Schrittmotoren) erreicht werden.

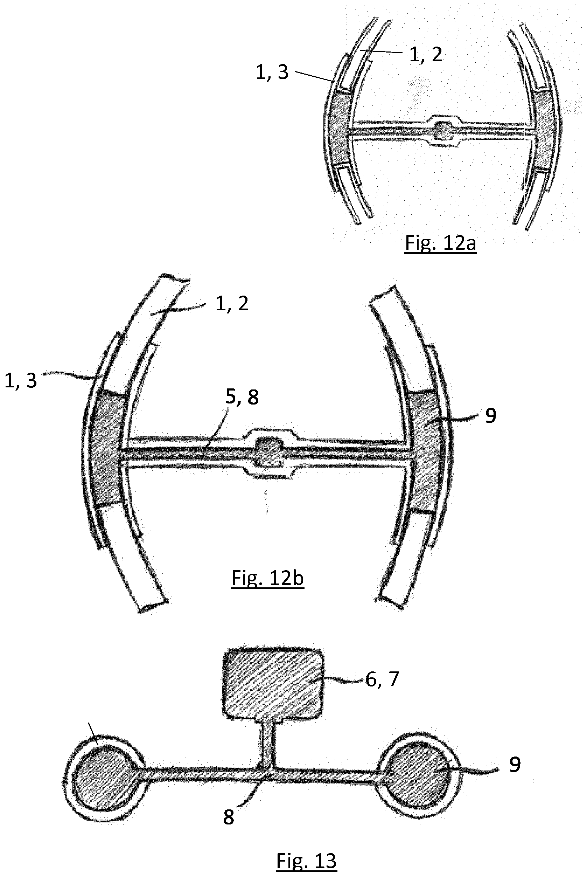

Fig. 12a und b und Fig. 13 zeigen schematisch eine mögliche pneumatische Steuerung oder Regelung der Lenkrad-Elemente 2, 3. Die pneumatische Steuerung der Elemente 2 umfasst eine Drucklufterzeugung 6, insbesondere einen Kompressor im Bereich des Mittelteils des Lenkrades, eine Druckluftaufbereitung 7, insbesondere durch Filter und Trockner, eine Druckluftverteilung 8, insbesondere ein Kanal der durch die Speichen 5 führt, sowie einen Anwendungsraum 9 für die Druckluft, also einen "Druckluftzylinder" im Inneren des Lenkradringes 1. Ein inneres insbesondere aus Vollmaterial ausgeführtes Element 2 des Lenkradringes 1 wirkt als verschiebbarer Kolben und kann durch Druckluft im Anwendungsraum 9 verschoben werden (Fig. 12b). Das innere Element 2 kann auch hohl ausgestaltet sein, diesfalls weisen bevorzugt die Enden oder ein beliebiger Bereich zwischen den Enden der inneren Elemente 2 einen verschlossenen Querschnitt auf (Fig. 12a).

Bei den pneumatisch gesteuerten Lenkrädern wird Druckluft dazu verwendet wird, die Arbeit zu verrichten und einen Innenring (inneres Element 2) aus einem Außenring (äußeres Element 3) durch Druck herauszuschieben, bzw. durch Ansaugen oder Unterdruck wieder hinein zu verschieben. Umgekehrt kann auch ein Außenring über einen Innenring verschoben werden.

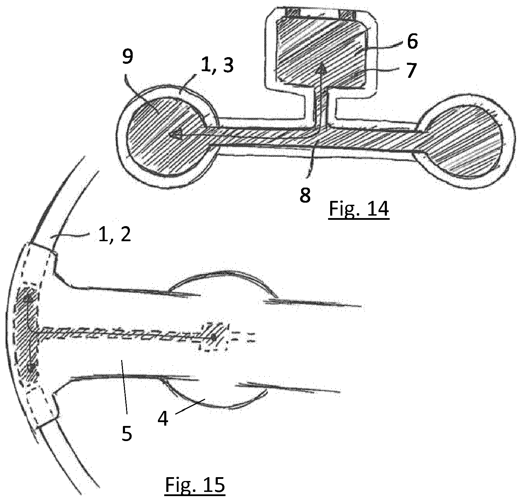

Eine ähnliche pneumatische Steuerung der Elemente 2 ist auch in den Fig. 14 und Fig. 15 dargestellt, wobei hierbei in Fig. 14 ein möglicher bidirektionaler Luftfluss durch Pfeile dargestellt ist und in Fig. 15 ein Teilringlenkrad, umfassend einen Mittelteil 4 und Speichen 5 die einstückig in äußere Elemente 3 des Lenkradringes 1 übergehen, dargestellt ist, dass zur Aufnahme der Elemente 2 ausgebildet ist, wobei die Druckluftverteilung 8 als vergleichsweise dünner Kanal in den vergleichsweise breiten Speichen 5 ausgebildet ist.

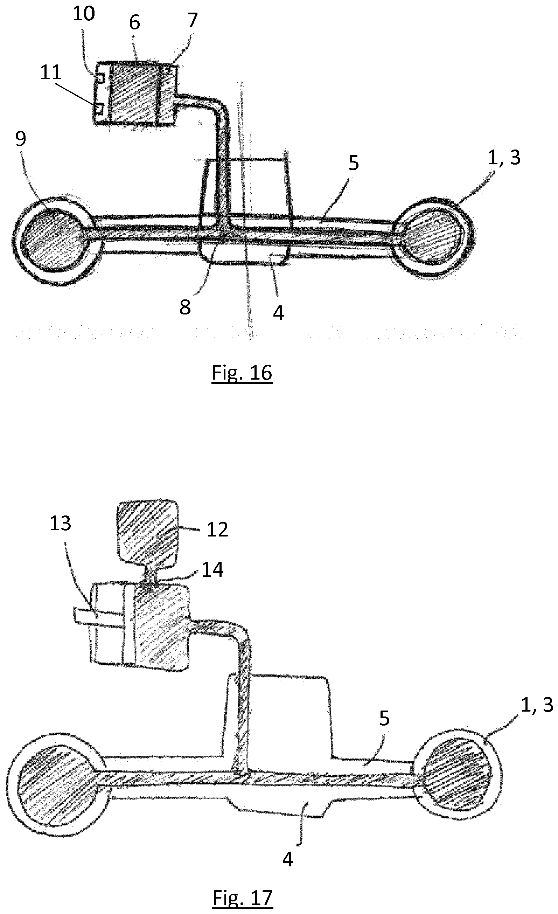

Im Unterschied zu den Fig. 12 - 15 zeigt die Fig. 16 eine pneumatische Steuerung der Umschaltung der Elemente 2, 3 des Lenkradringes 1 mit einer Drucklufterzeugung 6 und einer Druckluftaufbereitung 7 außerhalb des Lenkradtopfes, also außerhalb des Mittelteils 4. Die außerhalb des Lenkrades erzeugte Druckluft wird über einen Kanal einer Druckluftverteilung 8 zugeführt, die dann im Inneren des Mittelteils 4 und der Speichen 5 verläuft. Das Innere hohler Elemente 3 des Lenkradringes 1 wirkt wieder als Anwendungsraum 9 der Druckluft, also als Pneumatikzylinder. An der Drucklufterzeugung 6 sind auch ein Ansaugventil 10 und ein Auslassventil 11 angeordnet.

In Fig. 17 ist eine mögliche hydraulische Regelung der Elemente 2, 3 des Lenkradrings 1 dargestellt, wobei ein Hydraulik-Vorratsbehälter 12 und eine Pumpe mit Pumpkolben 13 ebenfalls außerhalb des Lenkradtopfes angeordnet sind. Hydraulik-Vorratsbehälter 12 und Pumpe mit Pumpkolben 13 sind über ein Ventil 14 miteinander verbunden. Durch die Pumpe ist ein Hydraulikfluid über Kanäle im Mittelteil 4 des Lenkrads und Speichen 5 in das Innere des Lenkradringes 1 förderbar.

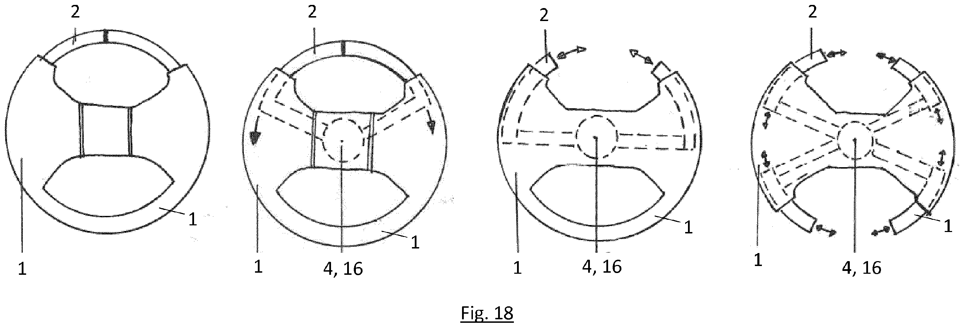

Die Fig. 18 bis Fig. 22 zeigen verschiedene Lösungen zur motorischen Rotation der Elemente 2, 3 des Lenkradringes 1.

In Fig. 18 wird die motorische Rotation der inneren Lenkradring-Elemente 2 über einen zentrischen Motor 16 bewirkt, also einen im Mittelteil 4 des Lenkrades angeordneten beispielsweise elektrischen Motor 16. Der äußere Lenkradring 1 ist dabei als Schale ausgeführt, die innere Elemente 2 des Lenkradringes 1 aufnehmen kann.

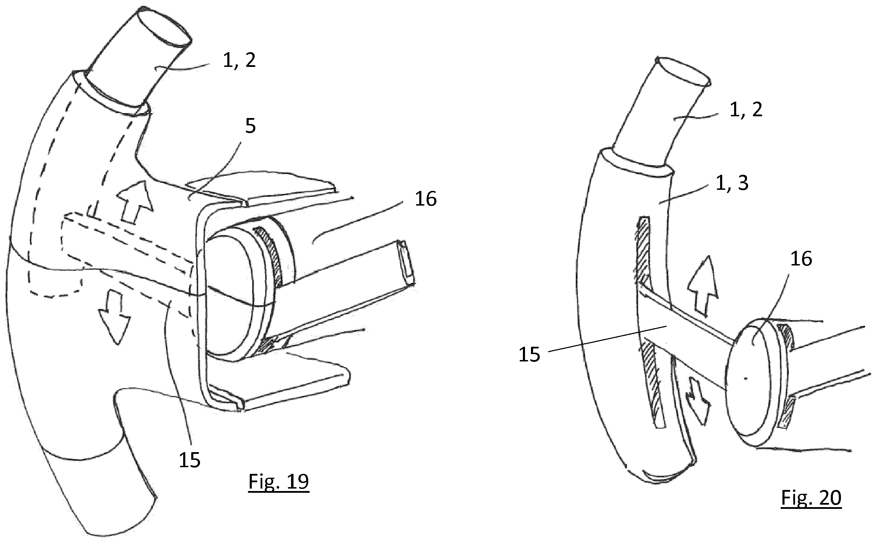

Fig. 19 bis 21 zeigen verschiedene Ausführungen eines erfindungsgemäßen Lenkrades mit zentral angeordnetem beispielsweise elektrischen Motor 16, wobei jeweils innere Lenkradring-Elemente 2 über den zentrischen Motor 16 rotiert werden.

In Fig. 19 ist das äußere Ringelement 3 zusammen mit einer äußeren Speiche 5 als Schale ausgeführt, die inneren Ringelemente 2 und die rotierenden inneren Speichen 15 befinden sich im Inneren der Schale.

In der Ausführungsform der Fig. 20 ist das äußere Ringelement 3 durch einen Schlitz durchbrochen. Eine rotierende Speiche 15, die vom Pralltopf durch den Schlitz des Außenringelementes 3 mit den inneren Ringelementen 2 verbunden ist ermöglicht die Rotationsbewegung der inneren Elemente 2.

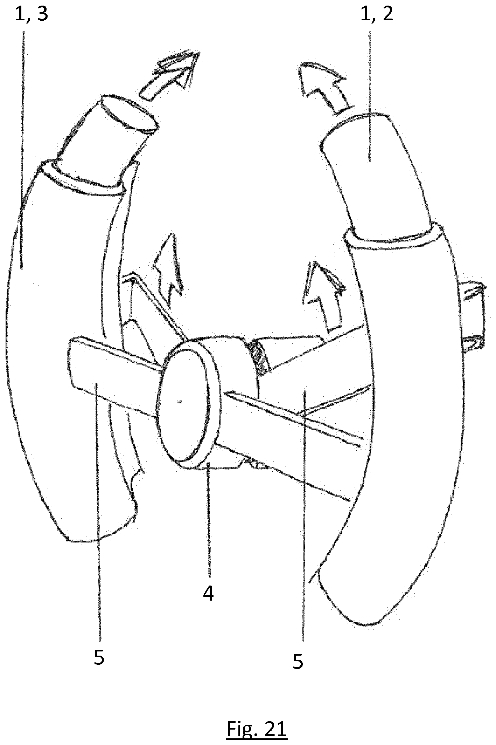

In der Variante der Fig. 21 ist das äußere Ringelement 3 durch einen auskragenden Schlitz im hinteren Griffbereich durchbrochen. Eine zweite rotierende Speiche 5 die vom Pralltopf bzw. Mittelteil 4 durch den Schlitz des Außenringes 3 mit den Innenringen 2 verbunden ist ermöglicht die Rotationsbewegung. Der Außenring ist über eine eigene Speiche 5 mit dem Pralltopf bzw. Mittelteil 4 verbunden. Zur Vermeidung von Verletzungen bzw. zur Verbesserung des Lenkkomforts können konstruktive Maßnahmen ergriffen werden, um den Übergang zwischen den im Querschnitt sich unterscheidenden äußeren und inneren Elementen 2, 3 kontinuierlicher zu gestalten. Wie beispielsweise an Fig. 21 ersichtlich, ist das äußere Element 3 im Übergangsbereich zum inneren Element 2 leicht angefast.

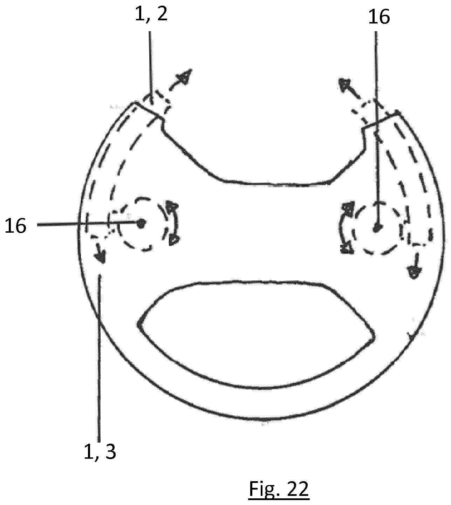

Fig. 22 zeigt schließlich schematisch eine Lösung zur motorischen Rotation der Lenkradringe durch zwei Motoren 16. Die vorzugsweise elektrischen Motoren 16 sind nahe den inneren Elementen 2 im Lenkrad angeordnet und können beispielsweise über Zahnradeingriff, beispielsweise übersetzt durch ein Getriebe, die inneren Elemente 2 bewegen.

### Bezugszeichenliste

- 1: Lenkradring
- 2: inneres Element des Lenkradringes
- 3: äußeres Element des Lenkradringes
- 4: Mittelteil des Lenkrades
- 5: Speiche des Lenkrades
- 6: Drucklufterzeugung
- 7: Druckluftaufbereitung
- 8: Druckluftverteilung
- 9: Anwendungsraum für die Druckluft
- 10: Ansaugventil
- 11: Auslassventil
- 12: Hydraulik-Vorratsbehälter
- 13: Pumpkolben
- 14: Ventil
- 15: innere Speiche
- 16: Motor

## Patentansprüche

1. Fahrzeug umfassend ein Lenkrad für das Fahrzeug, umfassend einen Lenkradring (1), wobei der Lenkradring (1) dazu vorbereitet ist, dass die Geometrie des Lenkradrings (1) von Vollringlenkrad auf Teilringlenkrad veränderbar, insbesondere umschaltbar, ist, wobei der Lenkradring (1) aus ineinander verschachtelbaren Elementen (2, 3), nämlich ineinander verfahrbaren Elementen (2, 3), besteht, nämlich aus zumindest einem äußeren Elemente (3) und zumindest einem inneren Element (2), **dadurch gekennzeichnet, dass** bei Betrieb des Fahrzeuges, im Falle eines Unfalles des Fahrzeuges, zumindest ein oben angeordnetes Lenkrad-Element (2, 3) automatisch wegbewegt wird.

2. Fahrzeug nach Anspruch 1, **dadurch gekennzeichnet, dass** die ineinander verschachtelbaren Elemente (2, 3) oder ineinander verfahrbaren Elemente (2, 3) ein geschlossenes oder ein offenes Profil aufweisen, und insbesondere Ringe oder Rohre bilden, bevorzugt mit rundem, ovalem oder eckigem Querschnitt.

3. Fahrzeug nach Anspruch 1 oder 2, **dadurch gekennzeichnet, dass** zumindest ein äußeres Element (3) und ein inneres Element (2) als hohles Profil ausgebildet ist.

4. Fahrzeug nach Anspruch 1 oder 2, **dadurch gekennzeichnet, dass** zumindest ein äußeres Element (3) als hohles Profil ausgebildet ist und zumindest ein inneres Element (2) als Vollmaterial, also nicht hohl, ausgebildet ist.

5. Fahrzeug nach einem der Ansprüche 1 bis 4, **dadurch gekennzeichnet, dass** das Lenkrad einen Mittelteil (4) umfasst und zumindest eine Speiche (5), wobei die Speiche (5) in ein äußeres Element (3) des Lenkradringes (1) übergeht.

6. Fahrzeug nach einem der Ansprüche 1 bis 5, **dadurch gekennzeichnet, dass** die Veränderung bzw. Umschaltung der Geometrie des Lenkradringes (1) mittels eines im Lenkrad zentrisch angeordneten Motors (16) oder mittels mindestens eines außerhalb des Lenkradzentrums angeordneten, insbesondere im Bereich der verfahrbaren Elemente (2, 3) angeordneten Motors (16), erfolgt.

7. Fahrzeug nach einem der Ansprüche 1 bis 6, **dadurch gekennzeichnet, dass** die Veränderung bzw. Umschaltung der Geometrie des Lenkradringes (1) hydraulisch und/oder pneumatisch und /oder elektrisch erfolgt.

8. Fahrzeug nach einem der Ansprüche 1 bis 7, **dadurch gekennzeichnet, dass** mit der Veränderung bzw. Umschaltung der Lenkradgeometrie automatisch die Lenkradübersetzung, also das Verhältnis von Lenkwinkel des Lenkrades zu Lenkwinkel an gelenkten Rädern des Fahrzeuges, mit verändert bzw. umgeschaltet wird.

9. Fahrzeug nach einem der Ansprüche 1 bis 8, **dadurch gekennzeichnet, dass** bei Betrieb des Fahrzeuges, im Falle eines Unfalles des Fahrzeuges, zumindest das oben angeordnete Lenkrad-Element (2, 3) automatisch entfernt oder wegbewegt wird mittels einer Steuereinheit des Fahrzeuges.

## Claims

1. Vehicle comprising a steering wheel for the vehicle, comprising a steering-wheel ring (1), wherein the steering-wheel ring (1) is designed such that the geometry of the steering-wheel ring (1) can be changed, in particular switched over, from a full-ring steering wheel to a partial-ring steering wheel, wherein the steering-wheel ring (1) is composed of elements (2, 3) that can be nested one inside the other, specifically elements (2, 3) that can be moved one inside the other, specifically of at least one outer element (3) and at least one inner element (2), **characterized in that**, during the operation of the vehicle, in the event of an accident of the vehicle, at least one steering-wheel element (2, 3) arranged at the top is automatically moved away.

2. Vehicle according to Claim 1, **characterized in that** the elements (2, 3) that can be nested one inside the other or the elements (2, 3) that can be moved one inside the other have a closed or an open profile, and in particular form rings or tubes, preferably with a circular, oval or polygonal cross section.

3. Vehicle according to Claim 1 or 2, **characterized in that** at least one outer element (3) and one inner element (2) is formed as a hollow profile.

4. Vehicle according to Claim 1 or 2, **characterized in that** at least one outer element (3) is formed as a hollow profile and at least one inner element (2) is formed as solid material, that is to say is not hollow.

5. Vehicle according to one of Claims 1 to 4, **characterized in that** the steering wheel comprises a central part (4) and at least one spoke (5), wherein the spoke (5) transitions into an outer element (3) of the steering-wheel ring (1).

6. Vehicle according to one of Claims 1 to 5, **characterized in that** the change or switchover of the geometry of the steering-wheel ring (1) is performed by means of a motor (16) arranged centrally in the steering wheel or by means of at least one motor (16) arranged outside the steering-wheel centre, in particular in the region of the movable elements (2, 3).

7. Vehicle according to one of Claims 1 to 6, **characterized in that** the change or switchover of the geometry of the steering-wheel ring (1) is performed hydraulically and/or pneumatically and/or electrically.

8. Vehicle according to one of Claims 1 to 7, **characterized in that**, with the change or switchover of the steering-wheel geometry, the steering wheel transmission ratio, that is to say the ratio of the steering angle of the steering wheel to the steering angle at steered wheels of the vehicle, is automatically jointly changed or switched over.

9. Vehicle according to one of Claims 1 to 8, **characterized in that**, during operation of the vehicle, in the event of an accident of the vehicle, at least the steering-wheel element (2, 3) arranged at the top is automatically removed or moved away by means of a control unit of the vehicle.

## Revendications

1. Véhicule comprenant un volant pour le véhicule, comprenant une couronne de volant (1), dans lequel la couronne de volant (1) est préparée pour que la géométrie de la couronne de volant (1) soit modifiable, en particulier convertible, d'une couronne de volant complète à une couronne de volant partielle, dans lequel la couronne de volant (1) se compose d'éléments emboîtables l'un dans l'autre (2, 3), à savoir d'éléments déplaçables l'un dans l'autre (2, 3), à savoir d'au moins un élément extérieur (3) et au moins un élément intérieur (2), **caractérisé en ce que** pendant le fonctionnement du véhicule, dans le cas d'un accident du véhicule, au moins un élément de volant (2, 3) placé en haut est écarté automatiquement.

2. Véhicule selon la revendication 1, **caractérisé en ce que** les éléments emboîtables l'un dans l'autre (2, 3) ou les éléments déplaçables l'un dans l'autre (2, 3) présentent un profil fermé ou ouvert, et en particulier forment des anneaux ou des tubes, de préférence avec une section transversale ronde, ovale ou polygonale.

3. Véhicule selon la revendication 1 ou 2, **caractérisé en ce qu'**au moins un élément extérieur (3) et un élément intérieur (2) est constitué par un profilé creux.

4. Véhicule selon la revendication 1 ou 2, **caractérisé en ce qu'**au moins un élément extérieur (3) est constitué par un profilé creux et au moins un élément intérieur (2) est formé par un matériau plein, donc pas creux.

5. Véhicule selon l'une quelconque des revendications 1 à 4, **caractérisé en ce que** le volant comprend une partie centrale et au moins un rayon (5), dans lequel le rayon (5) se prolonge dans un élément extérieur (3) de la couronne de volant (1).

6. Véhicule selon l'une quelconque des revendications 1 à 5, **caractérisé en ce que** la modification ou la conversion de la géométrie de la couronne de volant (1) est effectuée au moyen d'un moteur (1) disposé au centre dans le volant ou au moyen d'au moins un moteur (16) disposé à l'extérieur du centre du volant, en particulier dans la région des éléments déplaçables (2, 3).

7. Véhicule selon l'une quelconque des revendications 1 à 6, **caractérisé en ce que** la modification ou la conversion de la géométrie de la couronne de volant (1) est effectuée de façon hydraulique et/ou pneumatique et/ou électrique.

8. Véhicule selon l'une quelconque des revendications 1 à 7, **caractérisé en ce qu'**avec la modification ou la conversion de la géométrie du volant, la démultiplication du volant, donc le rapport de l'angle de direction du volant à l'angle de direction des roues articulées du véhicule, est modifié ou converti automatiquement.

9. Véhicule selon l'une quelconque des revendications 1 à 8, **caractérisé en ce que** lors du fonctionnement du véhicule, dans le cas d'un accident du véhicule, au moins l'élément de volant disposé en haut (2, 3) est automatiquement enlevé ou écarté au moyen d'une unité de commande du véhicule.
